(19) **Europäisches Patentamt**
**European Patent Office**
**Office européen des brevets**

(11) **EP 3 743 649 B1**

(12) **FASCICULE DE BREVET EUROPEEN**

(45) Date de publication et mention
de la délivrance du brevet:
**25.10.2023 Bulletin 2023/43**

(21) Numéro de dépôt: **19701498.8**

(22) Date de dépôt: **22.01.2019**

(51) Classification Internationale des Brevets (IPC):
**F16L 55/165** *(2006.01)*

(52) Classification Coopérative des Brevets (CPC):
(C-Sets disponibles)
**F16L 55/1652; B29C 63/34; B29C 65/02;**
**B29C 66/1122; B29C 66/5221; B29C 66/73921;**
**E03B 7/006; F16L 55/165; F16L 55/1654;**
**F16L 55/1656;** B29C 66/71; B29K 2023/06 (Cont.)

(86) Numéro de dépôt international:
**PCT/EP2019/051474**

(87) Numéro de publication internationale:
**WO 2019/141867 (25.07.2019 Gazette 2019/30)**

(54) **PROCEDE DE TUBAGE SANS ESPACE ANNULAIRE D'UNE CANALISATION**

VERFAHREN ZUM AUSKLEIDEN EINES ROHRES OHNE RINGRAUM

METHOD FOR LINING A PIPE WITHOUT AN ANNULAR SPACE

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **22.01.2018 FR 1850481**

(43) Date de publication de la demande:
**02.12.2020 Bulletin 2020/49**

(73) Titulaire: **AXEO**
**92230 Gennevilliers (FR)**

(72) Inventeurs:
  • **BUISSONNIERE, Bernard**
    **38780 ESTRABLIN (FR)**
  • **JEAN, Maximilien**
    **56410 ERDEVEN (FR)**
  • **GIORNI, Catherine**
    **69720 SAINT BONNET DE MURE (FR)**

(74) Mandataire: **Atout PI Laplace**
**Immeuble "Visium"**
**22, avenue Aristide Briand**
**94117 Arcueil Cedex (FR)**

(56) Documents cités:
**FR-A1- 2 854 938**

(52) Classification Coopérative des Brevets (CPC):
(Cont.)

C-Sets
B29C 66/71, B29K 2023/06;
B29C 66/71, B29K 2023/12

**Description**

L'invention se situe dans le domaine de la réhabilitation structurante de conduite. Elle concerne un procédé de tubage sans espace annulaire. L'invention s'applique particulièrement à des conduites d'eau potable mais peut s'appliquer à tout type de canalisation.

Le taux de renouvellement des canalisations est de 0,5% en moyenne en France. Ce taux est globalement insuffisant compte tenu du vieillissement des réseaux dont une part importante a été installée durant l'après-guerre, c'est-à-dire autour des années 1950.

Par ailleurs, les agglomérations réduisent de façon drastique les investissements dans les réseaux au fil des années. Il est donc impératif de trouver des solutions innovantes à moindre coût pour le renouvellement des réseaux.

Pour ce faire, il existe le tubage, principe qui consiste à introduire un tuyau neuf dans une canalisation existante. Le tubage peut être étanche, consolidant ou auto-structurant, avec ou sans espace annulaire. Par exemple, le tubage étanche est recommandé lorsque la conduite existante est mécaniquement solide mais comporte des fuites (aux joints par exemple). Le tubage consolidant participe quant à lui à l'amélioration de la structure de la conduite existante. Le tubage auto-structurant permet de reprendre complètement les contraintes structurelles et hydrauliques. Selon les problèmes rencontrés avec la canalisation, il est judicieux de définir au cas par cas la solution adaptée, en prenant en considération les encombrements associés, les plannings et les facteurs de sécurité.

Le tubage peut être avec ou sans espace annulaire. L'espace annulaire est l'espace situé entre le tuyau et la canalisation une fois le tuyau inséré dans la canalisation. Le tubage avec espace annulaire est un tubage pour lequel le diamètre extérieur du tube neuf est inférieur au diamètre intérieur de la conduite à tuber. Le tubage sans espace annulaire est un tubage pour lequel le diamètre extérieur du tube est égal au diamètre intérieur de la conduite à tuber.

Il existe différentes solutions de tubage. On peut citer la solution par étirement du tube. Des portions de tube de diamètre égal au diamètre de la canalisation à réhabiliter sont soudées pour former un tuyau. Le diamètre du tuyau est ensuite réduit par une forte traction et un passage en filière conique à froid ou à chaud suivant les diamètres considérés. Cela permet une réduction instantanée du diamètre du tuyau de 7 à 15%. Puis le tubage est mis en oeuvre par traction du tuyau à diamètre réduit en maîtrisant les efforts appliqués. Après l'introduction complète du tuyau, celui-ci est relaxé jusqu'à reprendre son diamètre initial en se plaquant sur la paroi de l'ancienne canalisation à réhabiliter. Cette solution est typiquement applicable pour un tuyau de diamètre compris entre 85 et 1200 mm.

Une autre solution est la compression du tube. Une fois les portions de tube de diamètre égal au diamètre de la canalisation à réhabiliter soudées, le tuyau obtenu est inséré dans une machine constituée de rouleaux concentriques. Ces rouleaux réduisent le diamètre du tuyau. Ensuite, le tuyau au diamètre réduit est introduit dans la canalisation à réhabiliter facilitant ainsi sa mise en oeuvre, notamment en limitant les efforts de tirage et les frottements lors de son tirage. Après introduction dans la canalisation, le tuyau est rempli d'eau à température ambiante et mis sous pression pour lui permettre de retrouver son diamètre initial avant réduction de son diamètre. Cette solution est applicable pour un tuyau de diamètre compris entre 100 et 500 mm. Le document FR 2 854 938 décrit un procédé de tubage sans espace annulaire d'une canalisation dans lequel on doit amener le tube dans un premier état stable, puis après pose dans la canalisation, on exerce une pression qui ramène le tube dans le second état stable, qui est en réalité son état initial. Autrement dit, la portion de tube est d'abord extrudée avec un premier diamètre correspondant au diamètre du deuxième état stable. Puis la portion de tube subit des contraintes mécaniques (par exemple par un cône de réduction) pour en réduire son diamètre au second diamètre du premier état stable. La portion subit deux déformations : du grand diamètre vers le petit diamètre par contrainte mécanique puis du petit diamètre vers le grand diamètre.

Il existe une solution par pliage du tube en oméga sur chantier. Une fois les portions de tube de diamètre égal au diamètre de la canalisation à réhabiliter soudées, le tuyau obtenu est plié en forme de U dans sa section et introduit dans la canalisation. Une fois en place, on procède à la réversion en remplissant d'eau sous pression la nouvelle canalisation (c'est-à-dire le tuyau en forme de U).

Une autre solution utilise la livraison du tuyau prédéformé en oméga en usine. Cette solution consiste à utiliser un tuyau livré en touret sur chantier prédéformé en forme de U dans sa section. Ce tuyau est tiré dans la canalisation à l'aide d'un treuil. Une fois en place dans la canalisation, il est mis sous pression et circulation d'air chaud afin de permettre au tuyau de reprendre sa forme circulaire initiale et de se plaquer sur la circonférence interne de la canalisation à réhabiliter.

Ces solutions existantes ne sont pas satisfaisantes car elles nécessitent une forte emprise de chantier. En effet, pour les solutions d'étirement, de compression et de pliage du tube, il est nécessaire de souder un train de tubes avant introduction du tuyau dans la canalisation. De plus, ces solutions ont une amenée et un repli conséquents car elles utilisent des machines et équipements spécifiques d'étirement, de compression ou de pliage. Ces solutions sont coûteuses en investissement et en utilisation. Par ailleurs, ces solutions sont limitées en longueur de tuyau. Enfin, la solution d'étirement ainsi que celle de pliage en oméga en usine nécessitent un procédé à chaud, ce qui complexifie la mise en oeuvre de ce type de solution. La solution de pliage en oméga en usine est également limitée en longueur et en diamètre.

L'invention vise à pallier tout ou partie des problèmes cités plus haut en proposant un procédé de tubage sans espace annulaire offrant une faible emprise de chantier, sans amenée et repli conséquents, sans limitation de diamètre ou de longueur, et ne nécessitant pas l'utilisation de machines particulières.

A cet effet, l'invention a pour objet un procédé de tubage sans espace annulaire d'une canalisation d'un premier diamètre s'étendant sensiblement selon un axe longitudinal, comprenant les étapes suivantes :

- insertion dans la canalisation par translation selon l'axe longitudinal d'une première portion de tube en matériau viscoélastique d'un second diamètre inférieur au premier diamètre pour former un tuyau (13) ;
- juxtaposition d'une deuxième portion de tube en matériau viscoélastique de second diamètre au tuyau dans l'alignement du tuyau selon l'axe longitudinal ;
- soudage de la deuxième portion de tube au tuyau de sorte à allonger le tuyau ;
- mise en position du tuyau dans la canalisation ;
- remplissage du tuyau par un liquide et mise en pression du liquide jusqu'à ce que le tuyau soit gonflé de sorte à se plaquer contre la canalisation ;
- déformation viscoélastique du tuyau.

Ce procédé permet d'obtenir un tubage sans espace annulaire sans équipement de chauffe, avec flexibilité d'insertion du tuyau et une faible emprise de chantier.

Avantageusement, l'étape de déformation viscoélastique du tuyau comprend une étape de déformation du tuyau par montée en pression du liquide et une étape de maintien de la déformation pendant une durée prédéterminée. Ces deux étapes permettent d'obtenir dans la canalisation à réhabiliter un diamètre de tuyau correspondant au diamètre de la canalisation à réhabiliter.

Avantageusement, la montée en pression se fait par paliers. Cela permet au tuyau de se déformer progressivement et d'éviter tout risque d'explosion due à la montée en pression.

Selon un mode de réalisation de l'invention, l'étape de juxtaposition de la deuxième portion de tube au tuyau, l'étape de soudage de la deuxième portion de tube au tuyau et l'étape de mise en position du tuyau sont répétées jusqu'à formation d'un tuyau d'une longueur prédéterminée. Cela permet d'obtenir un tuyau de longueur souhaitée.

Selon un mode de réalisation de l'invention, la répétition de l'étape de juxtaposition de la deuxième portion de tube au tuyau et de l'étape de soudage de la deuxième portion de tube au tuyau est réalisée préalablement à la mise en position du tuyau dans la canalisation. Cela permet de former le tuyau intégralement avant de l'insérer dans la canalisation à réhabiliter.

Avantageusement, le matériau viscoélastique est du polyéthylène, préférentiellement PE100.

Après l'étape de remplissage du tuyau par le liquide et mise en pression du liquide une étape de purgation d'air contenu dans le tuyau. Cette étape permet de s'assurer qu'il n'y a plus d'air dans le tuyau pour éviter toute détonation qui en résulterait lors de la montée en pression du liquide dans le tuyau.

Préalablement à l'étape d'insertion, le procédé selon l'invention peut comprendre une étape de fabrication de portions de tube en matériau viscoélastique de second diamètre et de masse linéaire égale à une masse linéaire d'une portion de tube de premier diamètre. Cette étape permet d'obtenir des portions de tube ayant des caractéristiques qui permettront au tuyau d'avoir une masse linéaire correspondant à son diamètre après déformation viscoélastique du tuyau.

Le procédé selon l'invention peut comprendre après l'étape de déformation viscoélastique une étape de raccordement du tuyau à un réseau de fluide.

Selon un mode de réalisation, l'étape de mise en position du tuyau dans la canalisation consiste à tirer le tuyau dans la canalisation jusqu'à une position prédéterminée.

L'invention sera mieux comprise et d'autres avantages apparaîtront à la lecture de la description détaillée d'un mode de réalisation donné à titre d'exemple, description illustrée par le dessin joint dans lequel :

- la figure 1 représente schématiquement les étapes d'un mode de réalisation d'un procédé de tubage sans espace annulaire selon l'invention,
- la figure 2 représente un graphique contrainte/déformation illustrant le comportement viscoélastique d'un matériau,
- la figure 3 représente schématiquement les étapes d'un autre mode de réalisation d'un procédé de tubage sans espace annulaire selon l'invention,
- les figures 4 et 5 représentent schématiquement la formation du tuyau utilisé dans le procédé de tubage selon l'invention au fur et à mesure de sa mise en place dans une canalisation,
- la figure 6 représente schématiquement la formation du tuyau utilisé dans le procédé de tubage selon l'invention avant sa mise en place dans une canalisation.

Par souci de clarté, les mêmes éléments porteront les mêmes repères dans les différentes figures.

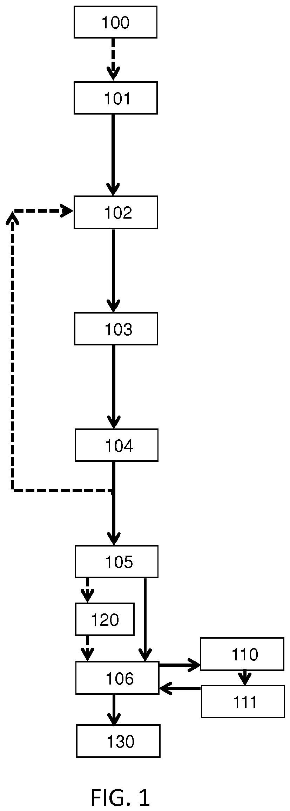

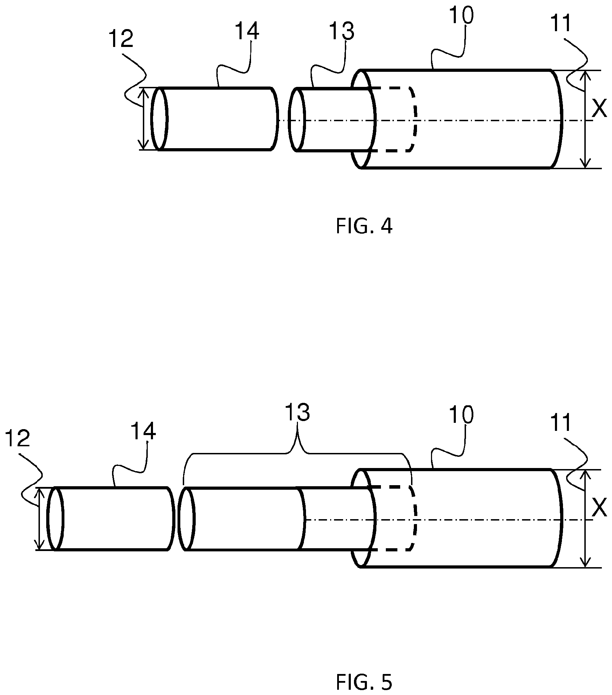

La **figure 1** représente schématiquement les étapes d'un mode de réalisation d'un procédé de tubage sans espace annulaire selon l'invention, en relation avec la figure 4.

Soit une canalisation 10 à réhabiliter d'un premier diamètre 11 s'étendant sensiblement selon un axe longitudinal X. Le procédé de tubage sans espace annulaire de la canalisation 10 comprend une étape 101 d'insertion dans la canalisation 10 par translation selon l'axe longitudinal X d'une première portion de tube 13 en matériau viscoélastique d'un second diamètre 12 inférieur au premier diamètre 11 pour former un tuyau 13. Ensuite, le procédé selon l'invention comprend une étape 102 de juxtaposition d'une deuxième portion de tube 14 en matériau viscoélastique de second diamètre 12 au tuyau 13 dans l'alignement du tuyau 13 selon l'axe longitudinal X. Le procédé selon l'invention comprend ensuite une étape 103 de soudage de la deuxième portion de tube 14 au tuyau 13 de sorte à allonger le tuyau 13. Autrement dit, le tuyau 13, initialement constitué de la première portion de tube, est allongé de la deuxième portion de tube 14, pour former un tuyau 13 plus long. Le tuyau 13 est alors mis en position (étape 104) dans la canalisation 10. Ensuite, le tuyau 13 est rempli par un liquide (étape 105) et le liquide est mis en pression jusqu'à ce que le tuyau 13 soit gonflé de sorte à se plaquer contre la canalisation 10. Préférentiellement, le liquide utilisé pour l'étape 105 est de l'eau. Néanmoins, l'invention s'applique à tout liquide, que ce soit de l'eau additionnée d'un colorant ou tout autre liquide. Enfin a lieu l'étape 106 de déformation viscoélastique du tuyau 13.

Une déformation viscoélastique est une réaction à la contrainte d'une matière se comportant comme si elle était composée d'un solide élastique et d'un fluide visqueux où l'écoulement serait dépendant de certains paramètres. Lorsqu'une structure élastique est déformée, la déformation de charge/décharge est instantanée et réversible. Lorsque la charge est retirée, on retrouve l'état initial instantanément et sans déformation permanente. Un matériau viscoélastique se comporte différemment : lors d'une déformation, sa réaction est intermédiaire entre celle d'un matériau élastique et celle d'un matériau visqueux. Les paramètres influençant l'écoulement d'un matériau viscoélastique sont, entre autres, la température, la charge, le gradient d'application de la charge.

L'invention repose sur la fabrication d'un tuyau de diamètre externe plus faible que la canalisation, et d'épaisseur relativement importante, ou autrement dit d'épaisseur initiale $e_{(i)}$ supérieure à l'épaisseur finale $e_{(f)}$ du tuyau (ou portions de tube). Lors de l'étape de déformation viscoélastique, le tuyau est élargi, c'est-à-dire que ses diamètres externe et interne (ou son diamètre nominal) augmentent, et son épaisseur diminue de manière concomittante.

On peut noter que le procédé décrit ci-dessus appliqué à une première portion de tube 13 et une deuxième portion de tube 14 peut s'appliquer à une pluralité de deuxièmes portions de tube 14 mises bout à bout les unes des autres. En d'autres termes, dans le procédé de l'invention, l'étape 102 de juxtaposition de la deuxième portion de tube 14 au tuyau 13, l'étape de soudage 103 de la deuxième portion de tube 14 au tuyau 13 et l'étape 104 de mise en position du tuyau 13 sont répétées jusqu'à formation d'un tuyau 13 d'une longueur prédéterminée. Cette longueur prédéterminée peut notamment correspondre à la longueur d'une portion de canalisation 10 qui a été isolée afin de la réhabiliter. Plus précisément, on juxtapose et soude une deuxième portion de tube 14 pour obtenir un tuyau 13 un peu plus long, et on insère davantage le tuyau 13 ainsi obtenu un peu plus dans la canalisation 10 (il s'agit de sa mise en position). Puis on juxtapose et soude une autre deuxième portion de tube 14 au tuyau 13 précédemment obtenu pour obtenir un tuyau 13 plus long, que l'on insère davantage dans la canalisation, etc. Le soudage de la portion de tube 14 au tuyau 13 à l'avancement de l'introduction du tuyau 13 dans la canalisation 10 permet une faible emprise du chantier.

Avantageusement, pour une canalisation à réhabiliter de longueur L, la longueur des portions de tube 13, 14 sont petites par rapport à la longueur L, de l'ordre de 1 à 40 % la longueur L, préférentiellement de 1 à 20%. La juxtaposition et le soudage de petites portions de tubes 14 pour former le tuyau induisent la faible emprise de chantier.

Ce procédé ne requiert aucun équipement de chauffe car la mise en oeuvre est faite à température ambiante.

Après sa mise en position, le tuyau 13 n'est pas soumis à des forces de tirage additionnelles, ce qui réduit le stress résiduel du tuyau. Les contraintes du tubage sont très limitées. En effet, le soudage du tuyau peut se faire directement au droit du puits d'introduction en même temps que sa mise en position. Il en résulte une faible emprise de chantier.

Après l'étape 106 de déformation viscoélastique du tuyau 13, le procédé selon l'invention peut comprendre une étape 130 de raccordement du tuyau 13 à un réseau de fluide. Cette étape consiste à placer une virole à l'extrémité du tuyau 13 pour mettre l'extrémité du tuyau 13 à un diamètre standard et procéder à un raccordement classique.

Par ailleurs, préalablement à l'étape 101, le procédé comprend avantageusement une étape 100 de fabrication de portions de tube 13, 14 en matériau viscoélastique de second diamètre 12, inférieur au premier diamètre 11, et de masse linéaire égale à une masse linéaire d'une portion de tube de premier diamètre 11. Par exemple, les portions de tube 13, 14 peuvent avoir un diamètre initial correspondant au diamètre intérieur de la canalisation 10 à réhabiliter moins 4%, avec la même masse linéaire qu'un tuyau standard de diamètre égal à celui de la canalisation 10 à réhabiliter. Cela permet d'assurer que le tuyau, après sa déformation viscoélastique (c'est-à-dire avec son diamètre agrandi), a les mêmes caractéristiques qu'un tuyau standard de ce diamètre agrandi. Il en ressort que chaque portion de tube ne subit qu'une seule déformation : la déformation viscoélastique lui permettant de passer du diamètre initial inférieur vers le diamètre de la canalisation.

Le procédé selon l'invention peut comprendre en outre, après l'étape 105 de remplissage du tuyau 13 par le liquide et mise en pression du liquide, une étape 120 de purgation d'air contenu dans le tuyau 13. Cette étape 120 de purgation d'air (ou de tout autre gaz) permet de s'assurer qu'il n'y a plus aucune poche d'air (ou de gaz) dans le tuyau 13, afin d'éviter un effet de détonation lors de la mise en pression du liquide dans le tuyau 13.

L'étape 106 de déformation viscoélastique du tuyau 13 comprend une étape 110 de déformation du tuyau 13 par montée en pression du liquide et une étape 111 de maintien de la déformation pendant une durée prédéterminée. La montée en pression se fait de préférence par paliers, mais pourrait, dans certains cas, également se faire en une seule fois.

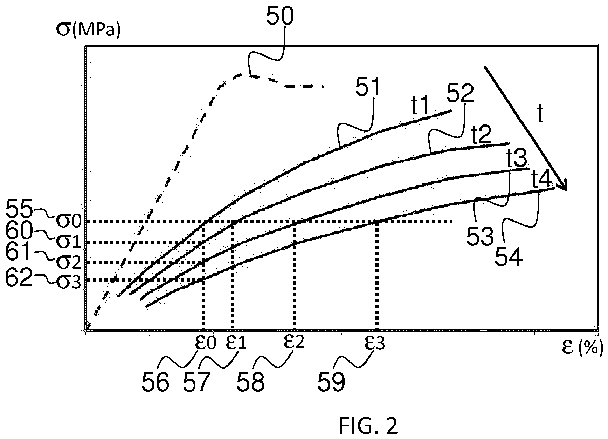

L'étape 106 de déformation viscoélastique du tuyau 13 est basée sur le comportement viscoélastique du tuyau 13. Le principe de ce comportement est expliqué avec la figure 2.

La **figure 2** représente un graphique contrainte/déformation illustrant le comportement viscoélastique d'un matériau. Le comportement d'un matériau viscoélastique, comme notamment le polyéthylène ou le polypropylène, se traduit par une relation entre la contrainte et la déformation qui est dépendante du temps pendant lequel la contrainte est appliquée. Dans le graphique de la figure 2, l'axe des abscisses représente la déformation en % et l'axe des ordonnées représente la contrainte en mégapascals (MPa). La courbe 50 en pointillés est la courbe classique d'un matériau élastique. Pour une contrainte donnée, il existe une déformation donnée et ce, quel que soit le temps pendant lequel la contrainte est appliquée.

Lorsqu'une contrainte fixe est appliquée à un matériau viscoélastique, celui-ci continue de se déformer dans le temps. C'est ce qu'on appelle le fluage. Ce comportement est représenté par les 4 courbes 51, 52, 53, 54 en ligne continue pour un matériau viscoélastique donné. Par exemple, en appliquant une contrainte 55 à ce matériau viscoélastique pendant une durée t1 (avec t1 < t2 < 3 < t4), le matériau va se déformer de 56 ($\varepsilon 0$ %). Si on applique la contrainte 55 à ce matériau viscoélastique pendant une durée t2, le matériau va se déformer de 57 ($\varepsilon 1$ %, avec $\varepsilon 0 < \varepsilon 1$). Si on applique la contrainte 55 à ce matériau viscoélastique pendant une durée t3, le matériau va se déformer de 58 ($\varepsilon 2$ %, avec $\varepsilon 1 < \varepsilon 2$). Enfin, si on applique la contrainte 55 à ce matériau viscoélastique pendant une durée t4, le matériau va se déformer de 59 ($\varepsilon 3$ %, avec $\varepsilon 2 < \varepsilon 3$).

De la même façon, lorsqu'une déformation constante est imposée à ce matériau viscoélastique, la contrainte générée par cette déformation va diminuer dans le temps. C'est ce qu'on appelle la relaxation. Par exemple, en imposant une déformation 56 ($\varepsilon 0$ %) à ce matériau viscoélastique pendant t1, la contrainte générée par cette déformation pendant t1 est 55 ($\sigma 0$ MPa). En imposant cette même déformation 56 ($\varepsilon 0$ %) à ce matériau viscoélastique pendant t2 (t2 > t1), la contrainte générée par cette déformation pendant t2 est 60 ($\sigma 1$ MPa, avec $\sigma 1 < \sigma 0$). En imposant cette même déformation 56 ($\varepsilon 0$ %) à ce matériau viscoélastique pendant t3 (t3 > t2), la contrainte générée par cette déformation pendant t3 est 61 ($\sigma 2$ MPa, avec $\sigma 2 < \sigma 1$). En imposant cette

même déformation 56 ($\varepsilon 0$ %) à ce matériau viscoélastique pendant t4 (t4 > t3), la contrainte générée par cette déformation pendant t4 est 62 ($\sigma 3$ MPa, avec $\sigma 3 < \sigma 2$).

Sur le même principe, pour assurer une certaine déformation 56 ($\varepsilon 0$ %), la contrainte $\sigma$ à appliquer au matériau va diminuer au cours du temps. Comme on peut le voir sur le graphique, au début de l'application d'une contrainte, on va appliquer la contrainte 55 ($\sigma 0$ MPa). Et au fur et à mesure de la durée d'application de la contrainte pour maintenir la déformation 56, la contrainte à appliquer va diminuer et passer à 60 ($\sigma 1$ MPa), puis 61 ($\sigma 2$ MPa), et enfin 62 ($\sigma 3$ MPa).

L'étape 106 de déformation viscoélastique du tuyau 13 utilise cette propriété du matériau viscoélastique. L'étape 110 de déformation du tuyau 13 par montée en pression du liquide utilise le fluage du matériau. Cette étape consiste à appliquer la contrainte nécessaire sur la période de temps nécessaire pour arriver à la déformation souhaitée. Ainsi, en reprenant l'exemple du matériau viscoélastique de la figure 2, pour obtenir une déformation de $\varepsilon 0$ % (référence 56), on peut appliquer la contrainte $\sigma 0$ MPa (référence 55) pendant la durée t1.

L'étape 111 de maintien de la déformation pendant une durée prédéterminée utilise la relaxation du matériau. Ainsi, en prenant un autre exemple du matériau viscoélastique de la figure 2, une fois le tuyau 13 déformé à $\varepsilon 0$ % après application d'une contrainte $\sigma 0$ pendant la durée t1, il faut effectuer l'étape 111 de maintien de la déformation $\varepsilon 0$ pendant une durée prédéterminée pour s'assurer que le tuyau 13 conserve son nouveau diamètre ainsi obtenu. La contrainte à générer pour maintenir la déformation $\varepsilon 0$ pendant une durée prédéterminée diminue au cours du temps. Elle va passer de $\sigma 0$ à $\sigma 3$.

Par effet mémoire après relaxation, les expérimentations effectuées dans le cadre de l'invention ont montré qu'il est possible d'atteindre un accroissement du diamètre du tuyau 13 de 1,2 à 1,7% après relaxation.

La technique consiste à se placer à une contrainte de paroi inférieure ou égale à la contrainte de déformation plastique instantanée. Pour le matériau viscoélastique PE100, cette valeur est égale à 19 MPa ($\sigma_{PE100}$ = 19 MPa).

La contrainte appliquée au tuyau 13 est générée à partir de la pression hydrostatique dans le tuyau 13 du fait de la montée en pression du liquide. La relation qui relie la pression P à la contrainte $\sigma$ est :

$$P = 2 * \sigma / (SDR - 1),$$

où SDR est l'abréviation de « Standard Dimension Ratio », signifiant Rapport Dimensionnel Standardisé. Il s'agit en fait du rapport entre le diamètre extérieur du tuyau et son épaisseur. Par exemple, pour SDR = 11, le diamètre extérieur du tuyau est 11 fois supérieur à l'épaisseur de sa paroi. C'est une valeur connue.

Il en résulte qu'avec un tuyau en PE100 ($\sigma_{PE100}$ = 19 MPa) et de SDR = 11, pour atteindre la contrainte de paroi inférieure ou égale à la contrainte de déformation plastique instantanée, il faut appliquer au tuyau une pression de $38*10^5$ Pa (= 38 bar).

Le matériau viscoélastique utilisé dans l'invention peut être n'importe quel matériau viscoélastique. Il peut s'agir du polypropylène. Il peut s'agir du polyéthylène comme le PE80 ou préférentiellement le PE100.

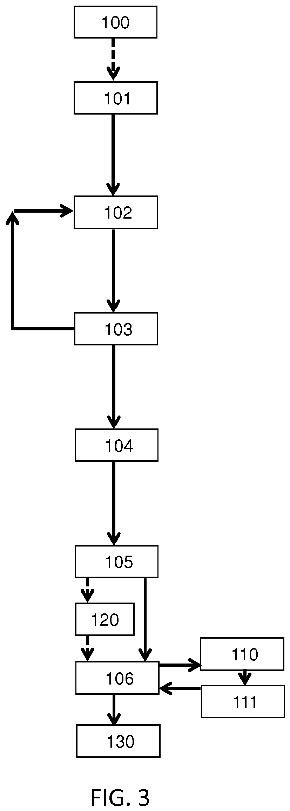

La **figure 3** représente schématiquement les étapes d'un autre mode de réalisation d'un procédé de tubage sans espace annulaire selon l'invention. Les étapes du mode de réalisation du procédé selon l'invention présentées à la figure 3 sont identiques à celles présentées à la figure 1 avec pour différence que dans le mode de réalisation présenté à la figure 3, les deuxièmes portions de tube 14 sont d'abord juxtaposées et soudées les unes aux autres, bout à bout, avant d'insérer le tuyau 13 ainsi formé dans la canalisation à réhabiliter. Autrement dit, la répétition de l'étape 102 de juxtaposition de la deuxième portion de tube 14 au tuyau 13 et de l'étape 103 de soudage de la deuxième portion de tube 14 au tuyau 13 est réalisée préalablement à la mise en position 104 du tuyau 13 dans la canalisation 10.

Les **figures 4 et 5** représentent schématiquement la formation du tuyau 13 utilisé dans le procédé de tubage selon l'invention au fur et à mesure de sa mise en place (étape 104) dans une canalisation 10. Comme expliqué précédemment, une première portion de tube 13 est insérée (étape 101) dans la canalisation 10 à réhabiliter. Une deuxième portion de tube 14 est juxtaposée à la portion de tube 13 (c'est-à-dire le tuyau) dans l'alignement du tuyau 13 selon l'axe longitudinal X. Cette deuxième portion de tube 14 est soudée au tuyau 13, de sorte à allonger le tuyau 13, comme on peut le voir sur la figure 5. A ce stade, le tuyau est mis en position (étape 104) dans la canalisation 10. Il est inséré un peu plus dans la canalisation 10 de sorte à ce que seule l'extrémité du tuyau 13 reste hors de la canalisation 10. Ensuite une autre deuxième portion de tube 14 est juxtaposée au tuyau 13 dans l'alignement du tuyau 13 selon l'axe longitudinal X. Cette autre portion de tube 14 est soudée au tuyau 13, de sorte à allonger encore le tuyau 13, qui est alors inséré un peu plus profondément selon l'axe longitudinal X dans la canalisation 10.

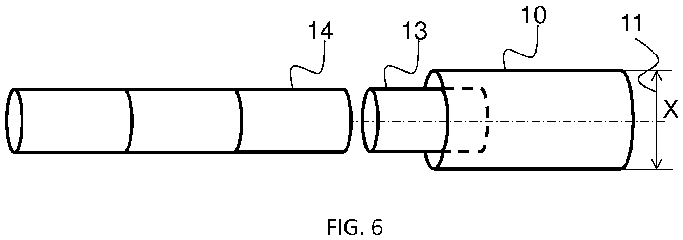

La **figure 6** représente schématiquement la formation du tuyau 13 utilisé dans le procédé de tubage selon l'invention avant sa mise en place dans une canalisation 10. Dans cette variante correspondant au procédé représenté à la figure 3, les portions de tube 14 sont d'abord juxtaposées les unes au bout des autres et soudées. Et seulement une fois que le tuyau 13 a la longueur souhaitée, le tuyau est mis en position dans la canalisation 10.

De manière générale, l'étape 104 de mise en position du tuyau 13 dans la canalisation consiste à positionner le tuyau 13 dans la canalisation 10 à une position prédéterminée. Cette mise en position du tuyau 13 peut être faite par tirage. Dans ce cas, on place dans la canalisation 10 un câble ou une barre relié(e) au tuyau 13. Ce câble ou cette barre est attaché(e) à une tête de tirage qui va avancer dans la canalisation 10 et ainsi tirer le tuyau 13 dans la canalisation 10 jusqu'à la position souhaitée. Cette position peut être intermédiaire, notamment dans le cas du soudage des portions de tube 14 à l'avancement, ou définitive une fois que le tuyau 13 est de longueur souhaité. La position définitive correspond généralement à la position dans laquelle le tuyau 13 est prévu pour réhabiliter la canalisation 10.

Alternativement au tirage, et de façon analogue, il est également possible de mettre en position le tuyau 13 dans la canalisation 10 en le poussant, par exemple au moyen d'un vérin pneumatique ou tout autre mécanisme adapté.

**Revendications**

1. Procédé de tubage sans espace annulaire d'une canalisation (10) d'un premier diamètre (11) s'étendant sensiblement selon un axe longitudinal (X), **caractérisé en ce qu'**il comprend les étapes suivantes :

    - insertion (101) dans la canalisation (10) par translation selon l'axe longitudinal (X) d'une première portion de tube (13) en matériau viscoélastique d'un second diamètre (12) inférieur au premier diamètre (11) pour former un tuyau (13) ;
    - juxtaposition (102) d'une deuxième portion de tube (14) en matériau viscoélastique de second diamètre (12) au tuyau (13) dans l'alignement du tuyau (13) selon l'axe longitudinal (X) ;
    - soudage (103) de la deuxième portion de tube (14) au tuyau (13) de sorte à allonger le tuyau (13) ;
    - mise en position (104) du tuyau (13) dans la canalisation (10) ;
    - remplissage (105) du tuyau (13) par un liquide et mise en pression du liquide jusqu'à ce que le tuyau (13) soit gonflé de sorte à se plaquer contre la canalisation (10) ;
    - déformation viscoélastique (106) du tuyau (13) et **en ce qu'**il comprend préalablement à l'étape (101) d'insertion une étape (100) de fabrication de portions de tube (13, 14) en matériau viscoélastique de second diamètre (12) inférieur au premier diamètre (11) et de masse linéaire égale à une masse linéaire d'une portion de tube de premier diamètre (11), de sorte que chaque portion de tube ne subit qu'une seule déformation viscoélastique, pendant le procédé de tubage, qui correspond à la déformation viscoélastique lui permettant de passer du diamètre initial inférieur, c'est-à-dire le second diamètre (12), vers le diamètre de la canalisation, c'est-à-dire le premier diamètre (11).

**2.** Procédé de tubage selon la revendication 1, dans lequel l'étape (106) de déformation viscoélastique du tuyau (13) comprend :

   - Une étape (110) de déformation du tuyau (13) par montée en pression du liquide ;
   - Une étape (111) de maintien de la déformation pendant une durée prédéterminée.

**3.** Procédé de tubage selon la revendication 2, dans lequel la montée en pression se fait par paliers.

**4.** Procédé de tubage selon l'une quelconque des revendications précédentes, dans lequel :

   - l'étape (102) de juxtaposition de la deuxième portion de tube (14) au tuyau (13),
   - l'étape de soudage (103) de la deuxième portion de tube (14) au tuyau (13), et
   - l'étape (104) de mise en position du tuyau (13),

   sont répétées jusqu'à formation d'un tuyau (13) d'une longueur prédéterminée.

**5.** Procédé de tubage selon la revendication 4, dans lequel la répétition de :

   - l'étape (102) de juxtaposition de la deuxième portion de tube (14) au tuyau (13) et de
   - l'étape (103) de soudage de la deuxième portion de tube (14) au tuyau (13),

   est réalisée préalablement à la mise en position (104) du tuyau (13) dans la canalisation (10).

**6.** Procédé de tubage selon l'une quelconque des revendications précédentes, dans lequel le matériau viscoélastique est du polyéthylène, préférentiellement PE100.

**7.** Procédé de tubage selon l'une quelconque des revendications précédentes, comprenant après l'étape (105) de remplissage du tuyau (13) par le liquide et mise en pression du liquide une étape (120) de purgation d'air contenu dans le tuyau (13).

**8.** Procédé de tubage selon l'une quelconque des revendications précédentes, comprenant après l'étape (106) de déformation viscoélastique une étape (130) de raccordement du tuyau (13) à un réseau de fluide.

**9.** Procédé de tubage selon l'une quelconque des revendications précédentes, dans lequel l'étape (104) de mise en position du tuyau (13) dans la canalisation consiste à tirer le tuyau (13) dans la canalisation jusqu'à une position prédéterminée.

**10.** Procédé de tubage selon l'une quelconque des revendications 2 à 9, dans lequel l'étape (110) de déformation du tuyau (13) est réalisée par application au tuyau (13) d'une contrainte générée à partir d'une pression hydrostatique P dans le tuyau (13) par montée en pression du liquide, définie par l'équation P = 2 * σ / (SDR - 1), dans laquelle SDR est un rapport entre le diamètre extérieur et l'épaisseur du tuyau (13) et σ est la contrainte.

**11.** Procédé de tubage selon l'une quelconque des revendications précédentes, dans lequel les portions de tube ont une épaisseur initiale $e_{(i)}$ avant la déformation viscoélastique (106) supérieure à l'épaisseur finale $e_{(f)}$ après la déformation viscoélastique (106).

**12.** Procédé de tubage selon l'une quelconque des revendications précédentes, dans lequel chaque portion de tube subit une seule déformation après l'étape de fabrication (100).

**Patentansprüche**

**1.** Verfahren zum ringraumfreien Verrohren einer Kanalisation (10) mit einem ersten Durchmesser (11), der sich im Wesentlichen entlang einer Längsachse (X) erstreckt, **dadurch gekennzeichnet, dass** es die folgenden Schritte umfasst:

   - Einsetzen (101) eines ersten Rohrabschnitts (13) aus einem viskoelastischem Material mit einem zweiten Durchmesser (12), der kleiner ist als der erste Durchmesser (11), in die Kanalisation (10) durch Verschieben entlang der Längsachse (X), um ein Rohr (13) zu bilden;
   - Anlegen (102) eines zweiten Rohrabschnitts (14) aus viskoelastischem Material mit einem zweiten Durchmesser (12) an das Rohr (13) in der Ausrichtung des Rohrs (13) entlang der Längsachse (X);
   - Verschweißen (103) des zweiten Rohrabschnitts (14) mit dem Rohr (13), so dass das Rohr (13) verlängert wird;
   - Positionieren (104) des Rohrs (13) in der Kanalisation (10);
   - Füllen (105) des Rohrs (13) mit einer Flüssigkeit und Unterdrucksetzen der Flüssigkeit, bis das Rohr (13) aufgeblasen ist, so dass es sich an die Kanalisation (10) anlegt;
   - viskoelastisches Verformen (106) des Rohrs (13),

   und dadurch, dass es vor dem Schritt (101) des Einsetzens einen Schritt (100) des Herstellens von Rohrabschnitten (13, 14) aus viskoelastischem Material mit einem zweiten Durchmesser (12), der kleiner als der erste Durchmesser (11) ist, und einer linearen Masse, die gleich einer linearen Masse eines Rohrabschnitts mit einem ersten Durchmesser (11) ist, umfasst, so dass jeder Rohrabschnitt während des Verrohrungsverfahrens nur eine einzige viskoelastische Verformung erfährt, die der viskoelastischen Verformung entspricht, die es ihm ermöglicht, von dem anfänglichen kleineren Durchmesser, d.h. dem zweiten Durchmesser (12), zum Durchmesser der Rohrleitung, d.h. dem ersten Durchmesser (11), überzugehen.

2. Verrohrungsverfahren nach Anspruch 1, wobei der Schritt (106) des viskoelastischen Verformens des Rohrs (13) Folgendes umfasst:

    - einen Schritt (110) des Verformens des Rohrs (13) durch Aufbauen des Drucks der Flüssigkeit;
    - einen Schritt (111) des Beibehaltens der Verformung für eine vorbestimmte Zeitdauer.

3. Verrohrungsverfahren nach Anspruch 2, wobei der Druckaufbau stufenweise erfolgt.

4. Verrohrungsverfahren nach einem der vorhergehenden Ansprüche, wobei:

    - der Schritt (102) des Anlegens des zweiten Rohrabschnitts (14) an das Rohr (13),
    - der Schritt (103) des Verschweißens des zweiten Rohrabschnitts (14) mit dem Rohr (13), und
    - der Schritt (104) des Positionierens des Rohrs (13) wiederholt werden, bis ein Rohr (13) mit einer vorbestimmten Länge gebildet ist.

5. Verrohrungsverfahren nach Anspruch 4, wobei das Wiederholen:

    - des Schrittes (102) des Anlegens des zweiten Rohrabschnitts (14) an das Rohr (13) und
    - des Schrittes (103) des Verschweißens des zweiten Rohrabschnitts (14) mit dem Rohr (13)

    vor dem Positionieren (104) des Rohrs (13) in der Kanalisation (10) erfolgt.

6. Verrohrungsverfahren nach einem der vorhergehenden Ansprüche, wobei das viskoelastische Material Polyethylen, vorzugsweise PE100, ist.

7. Verrohrungsverfahren nach einem der vorhergehenden Ansprüche, das nach dem Schritt (105) des Füllens des Rohrs (13) mit der Flüssigkeit und des Unterdrucksetzens der Flüssigkeit einen Schritt (120) des Beseitigens von in dem Rohr (13) enthaltener Luft umfasst.

8. Verrohrungsverfahren nach einem der vorhergehenden Ansprüche, das nach dem Schritt (106) des viskoelastischen Verformens einen Schritt (130) des Anschließens des Rohrs (13) an ein Fluidnetz umfasst.

9. Verrohrungsverfahren nach einem der vorhergehenden Ansprüche, wobei der Schritt (104) des Positionierens des Rohrs (13) in der Kanalisation darin besteht, das Rohr (13) in der Kanalisation bis zu einer vorbestimmten Position zu ziehen.

10. Verrohrungsverfahren nach einem der Ansprüche. 2 bis 9, wobei der Schritt (110) des Verformens des Rohrs (13) durch Applizieren einer Spannung auf das Rohr (13) durchgeführt wird, die auf der Basis eines hydrostatischen Drucks P in dem Rohr (13) durch Aufbauen des Drucks der Flüssigkeit erzeugt wird, definiert durch die Gleichung P = 2 * $\sigma$ / (SDR - 1), wobei SDR ein Verhältnis zwischen dem Außendurchmesser und der Dicke des Rohrs (13) und $\sigma$ die Spannung ist.

11. Verrohrungsverfahren nach einem der vorhergehenden Ansprüche, wobei die Rohrabschnitte eine Anfangsdicke $e_{(i)}$ vor der viskoelastischen Verformung (106) haben, die größer ist als die Enddicke $e_{(f)}$ nach der viskoelastischen Verformung (106).

12. Verrohrungsverfahren nach einem der vorhergehenden Ansprüche, wobei jeder Rohrabschnitt nach dem Herstellungsschritt (100) einer einzigen Verformung unterzogen wird.

## Claims

1. A method for lining a pipeline (10) without an annular space, said pipeline having a first diameter (11) substantially extending along a longitudinal axis (X), **characterised in that** it comprises the following steps:

    - inserting (101) a first tube portion (13) made of viscoelastic material into the pipeline (10) by translation along the longitudinal axis (X), with said first tube portion (13) having a second diameter (12) smaller than the first diameter (11) in order to form a pipe (13);
    - juxtaposing (102) a second tube portion (14) made of viscoelastic material with a second diameter (12) of the pipe (13) in line with the pipe (13) along the longitudinal axis (X);
    - welding (103) the second tube portion (14) to the pipe (13) so as to extend the pipe (13);
    - positioning (104) the pipe (13) in the pipeline (10);
    - filling (105) the pipe (13) with a liquid and pressurising the liquid until the pipe (13) is inflated so as to press against the pipeline (10);

- viscoelastically deforming (106) the pipe (13),

and **in that** it comprises, prior to the insertion step (101), a step (100) of manufacturing tube portions (13, 14) made of viscoelastic material having a second diameter (12) that is lower than the first diameter (11) and having a linear mass equal to a linear mass of a tube portion having a first diameter (11), so that each tube portion undergoes only one viscoelastic deformation, during the lining method, that corresponds to the viscoelastic deformation allowing it to transition from the initial lower diameter, i.e., the second diameter (12), to the diameter of the pipeline, i.e., the first diameter (11).

2. The lining method according to claim 1, wherein the step (106) of viscoelastically deforming the pipe (13) comprises:

- a step (110) of deforming the pipe (13) by increasing the pressure of the liquid;
- a step (111) of maintaining the deformation for a predetermined duration.

3. The lining method according to claim 2, wherein the pressure increase occurs in steps.

4. The lining method according to any one of the preceding claims, wherein:

- the step (102) of juxtaposing the second tube portion (14) with the pipe (13),
- the step (103) of welding the second tube portion (14) to the pipe (13), and
- the step (104) of positioning the pipe (13),

are repeated until a predetermined length of pipe (13) is formed.

5. The lining method according to claim 4, wherein repeating:

- the step (102) of juxtaposing the second tube portion (14) with the pipe (13), and
- the step (103) of welding the second tube portion (14) to the pipe (13), is carried out prior to positioning (104) of the pipe (13) in the pipeline (10).

6. The lining method according to any one of the preceding claims, wherein the viscoelastic material is polyethylene, preferably PE100.

7. The lining method according to any one of the preceding claims, comprising, after the step (105) of filling the pipe (13) with the liquid and pressurising the liquid, a step (120) of purging air contained in the pipe (13).

8. The lining method according to any one of the preceding claims, comprising, after the viscoelastic deformation step (106), a step (130) of connecting the pipe (13) to a fluid network.

9. The lining method according to any one of the preceding claims, wherein the step (104) of positioning the pipe (13) in the pipeline involves pulling the pipe (13) into the pipeline to a predetermined position.

10. The lining method according to any one of claims 2 to 9, wherein the step (110) of deforming the pipe (13) is carried out by applying a stress to the pipe (13) that is generated from a hydrostatic pressure P in the pipe (13) by increasing the pressure of the liquid, defined by the equation P = 2 * $\sigma$ / (SDR - 1), where SDR is a ratio between the external diameter and the thickness of the pipe (13) and $\sigma$ is the stress.

11. The lining method according to any one of the preceding claims, wherein the tube portions have an initial thickness $e_{(i)}$ before the viscoelastic deformation (106) that is greater than the final thickness $e_{(f)}$ after the viscoelastic deformation (106).

12. The lining method according to any one of the preceding claims, wherein each tube portion undergoes a single deformation after the manufacturing step (100).

FIG. 1

FIG. 2

FIG. 3

FIG. 4

FIG. 5

FIG. 6

**EP 3 743 649 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2854938